# EUROPEAN PATENT SPECIFICATION

(11) **EP 1 392 619 B1**
(45) Date of publication and mention of the grant of the patent: **17.08.2005**
(21) Application number: 02738421.3
(22) Date of filing: 28.05.2002
(51) Int. Cl.: C04B 41/89, C25C 3/08, C25C 3/12, F27D 23/04

(54) **HYDROPHILIC PROTECTIVE LAYERS BONDED ON HYDROPHOBIC SUBSTRATES FOR USE AT ELEVATED TEMPERATURE**
AN HYDROPHOBE SUBSTRATE GEBUNDENE HYDROPHILE SCHUTZSCHICHTEN FÜR HOCHTEMPERATURANWENDUNGEN
COUCHES PROTECTRICES HYDROPHILES LIEES A DES SUBSTRATS HYDROPHOBES POUR UTILISATION A TEMPERATURE ELEVEE

(30) Priority: 30.05.2001 WO PCT/IB01/00949
(43) Date of publication of application: 03.03.2004
(73) Proprietor: MOLTECH Invent S.A., 1520 Luxembourg (LU)
(72) Inventor: NGUYEN, Thinh, T., CH-1213 Onex (CH); DE NORA, Vittorio, Nassau (BS)
(74) Representative: Cronin, Brian
(86) International application number: PCT/IB2002/001932
(87) International publication number: WO 2002/096831

(56) References cited:
- WO-A-00/63630
- WO-A-93/20027
- WO-A-98/17842
- DATABASE CA [Online] CHEMICAL ABSTRACTS SERVICE, COLUMBUS, OHIO, US; HAKUTO KAGAKU K. K., JAPAN ET AL: "Coating carbon electrodes" retrieved from STN Database accession no. 102:118464 CA XP002213169 & JP 59 184781 A (HAKUTO KAGAKU K. K., JAPAN;NISSHIN STEEL CO., LTD.) 20 October 1984 (1984-10-20)

## Description

### Field of the Invention

The invention relates to the bonding of hydrophilic protective layers, in particular ceramic layers, on hydrophobic substrates, such as carbon substrates, for use at high temperature, in particular in processes for the production, purification or recycling of metals in a molten state during which the protected substrates are exposed to high temperature oxidising and/or corrosive environments.

### Background of the Invention

The production, purification or recycling of metals, such as aluminium or steel, is usually carried out at high temperature in very aggressive environments, in particular in molten metal, molten electrolyte and/or corrosive gas. Therefore, the materials used for the manufacture of components exposed to such environments must be thermally and chemically stable.

Graphite and other carbonaceous materials are commonly used for components, especially conductive components. Unfortunately, carbon components do not resist oxidation and/or corrosion and must be periodically replaced.

Several proposals have been made to reduce wear of carbon components in such technologies to achieve a higher operation efficiency, reduce pollution and the costs of operation.

In the field of steel recycling using arc electrode furnaces, it has been sought to reduce oxidation wear of inactive lateral faces of carbon arc electrodes, which is caused by exposure to oxygen at the high operating temperature. For instance, in US Patent 5,882,374 (Hendrix) it has been proposed to coat the inactive lateral face of the arc electrode with silica material to avoid consumption of the lateral face.

For the purification of molten metals, in particular molten aluminium, by the injection of a flux removing impurities towards the surface of the molten metal, it has been proposed to coat carbon components which are exposed to the molten metal with a coating of refractory material as disclosed in WO00/63630 (Holz/Duruz).

In aluminium production, some components are exposed to molten fluoride-containing electrolyte, molten aluminium and/or anodically produced oxygen. In conventional Hall-Héroult cells these components are still made of consumable carbonaceous materials.

It has long been recognised that it would be desirable to make (or coat or cover) the cathode of an aluminium electrowinning cell with a refractory boride such as titanium diboride that would render the cathode surface wettable to molten aluminium which in turn would lead to a series of advantages.

US Patents 5,310,476, 5,364,513 (both in the name of Sekhar/de Nora) and 5,651,874 (de Nora/Sekhar) all disclose applying a protective coating of a refractory material such as titanium diboride to a carbon component of an aluminium electrowinning cell, by applying thereto a slurry of particulate refractory material and/or precursors thereof in a colloid in several layers with drying between each layer.

WO98/17842 (Sekhar/Duruz/Liu) discloses another refractory boride coating produced from a slurry of different particle grades of the refractory boride or a precursor in a al carrier which can also comprise an organic carbon-based additive selected from polyvinyl alcohol, polyacrylic acid, hydroxy propyl methyl cellulose, polyethylene glycol, ethylene glycol, butyl benzyl phthalate, ammonium polymethacrylate and mixtures thereof to avoid mud-cracks in the coating.

### Summary of the Invention

An important object of the invention is to provide a method for coating a hydrophobic substrate, in particular made of carbon, with an hydrophilic protective layer free of organic carbon for use at high temperature.

Therefore, the invention relates to a method of coating a hydrophobic substrate, in particular made of carbon, with an hydrophilic protective layer free of organic carbon, in particular a metal, ceramic or cermet protective layer, to protect the substrate when used at high temperature in particular in a cell for the electrowinning of aluminium from alumina dissolved in a fluoride-containing electrolyte. This method comprises: applying one or more layers of a slurry comprising hydrophilic colloidal particles and/or hydrophilic inorganic polymeric particles onto the hydrophobic substrate followed by drying to form a heat stable intermediate bonding layer on the hydrophobic substrate; and applying one or more layers of a slurry forming the hydrophilic protective layer onto the intermediate bonding layer followed by drying and/or heat treating to form the hydrophilic protective layer on the intermediate bonding layer.

According to the invention, the slurry forming the intermediate bonding layer contains at least one organic carbon compound selected from hydrophobic carbon monomers and hydrophobic carbon polymers and comprising hydrophilic substituents in an amount sufficient to bond the hydrophilic colloidal/inorganic polymeric particles to the monomer and/or polymer carbon compound(s).

Usually, the hydrophilic colloidal particles are made of a heat stable ceramic, e.g. oxide, or a precursor thereof in the form of a metal salt (e.g. hydroxide) and have a generally spherical or polyhedral shape of submicronic dimensions, typically having a diameter between 10 and 100 nanometer, and are dispersed in an aqueous dispersion liquid. The hydrophilic inorganic polymeric particles are also made of precursors of heat stable ceramic such as oxides (e.g. in the form of hydrolysed metal salts), and are in the form of molecular chains of submicronic length, typically form 1 to 100 nm long, dissolved in a solution. The magnitude of these dimensions distinguishes colloids/inorganic polymers from bulk systems in the following way: (a) an extremely large surface area and (b) a significant percentage of molecules reside in the surface of colloidal/polymeric systems. Up to 40% of the molecules may reside at the surface of the colloidal particles and up to 100% of the molecules may reside at the surface of the polymeric particle.

The bonding between the hydrophilic substituent and the hydrophilic colloidal/inorganic polymeric particles in the intermediate bonding layer is of electrostatic nature. In the case of a slurry of TiB₂ particles suspended but not dispersed in a colloidal alumina carrier containing polyvinyl alcohol as a hydrophobic carbon polymer with hydrophilic substituents, the bonding of the constituents is as follows:

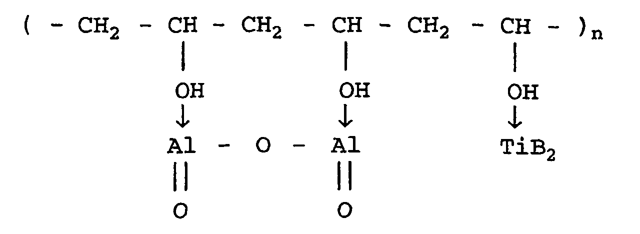

The alcohol groups (-OH) of the polyvinyl alcohol chain interact with the hydrophilic constituents, i.e. alumina and titanium diboride, whereas the hydrophobic hydrocarbon sites (-CH- and -CH₂-) of the polyvinyl alcohol chain are absorbed by the surface of the hydrophobic substrate, e.g. carbon, and secure the intermediate bonding layer thereon.

The bonding between the hydrophilic protective layer and the intermediate bonding layer is ensured by the affinity of the hydrophilic constituents of both layers.

During heat treatment the polymer and/or monomer carbon compound(s) usually decomposes and the hydrophilic substituents may evaporate leaving the hydrophilic colloidal/inorganic polymeric particles in intimate contact with the carbon remaining from the carbon compound.

It follows that the hydrophilic protective layer on the intermediate bonding layer is well bonded on the hydrophobic substrate without containing at its surface organic carbon material that could react during use to form carbides, in particular aluminium carbide, thereby damaging the protecting layer and impairing its electrical conductivity.

Suitable hydrophilic substituents of the monomer and/or polymer carbon compound(s) may be selected from -OH, -SO₃Na and -COOH, and combinations thereof. The monomer and/or polymer carbon compound(s) can have a carbon/hydrophilic substituent ratio in the range of 2 to 4. For example, the monomer and/or polymer carbon compound(s) is/are selected from ethylene glycol, hexanol, polyvinyl alcohol, polyvinyl acetate, polyacrylic acid, hydroxy propyl methyl cellulose and ammonium polymethacrylate and mixtures thereof.

In one embodiment the hydrophilic protective layer is applied from a slurry comprising colloidal and/or inorganic polymeric particles and non-dispersed suspended particulate refractory material.

The slurry forming the intermediate bonding layer and/or the slurry forming the hydrophilic protective layer may comprise hydrophilic colloidal particles selected from lithia, beryllium oxide, magnesia, alumina, silica, titania, vanadium oxide, chromium oxide, manganese oxide, iron oxide, gallium oxide, yttria, zirconia, niobium oxide, molybdenum oxide, ruthenia, indium oxide, tin oxide, tantalum oxide, tungsten oxide, thallium oxide, ceria, hafnia and thoria, and precursors thereof, all in the form of colloids; and/or hydrophilic inorganic polymeric particles selected from lithia, beryllium oxide, alumina, silica, titania, chromium oxide, iron oxide, nickel oxide, gallium oxide, zirconia, niobium oxide, ruthenia, indium oxide, tin oxide, hafnia, tantalum oxide, ceria and thoria, and precursors thereof, all in the form of inorganic polymers.

The slurry forming the intermediate bonding layer can further comprise non-dispersed suspended particulate refractory material or a precursor thereof, or particulate carbon.

It is preferable to choose particle size below 100 microns for the non-dispersed (organic carbon-free or organic carbon-containing) refractory particles and, when employing combinations of non-dispersed refractory particles, to choose particle sizes which are varied such that the packing of particles is optimised. For example when choosing a composition containing mostly SiC and some MoSi₂ as non-dispersed particles it is preferable to choose the particle size of the MoSi₂ much smaller (at least three times smaller) than the SiC. Generally, the ratio of the particle sizes will be in the range from 2:1 to 5:1, preferably about 3:1, for instance with large particles in the range 15 to 30 micrometers and small particles in the range 5 to 10 micrometers.

The slurry forming the intermediate bonding layer and/or the slurry forming the hydrophilic protective layer usually comprises non-dispersed particulate refractory material selected from borides, silicides, nitrides, oxynitrides, carbides, oxycarbides, phosphides, oxides, aluminides, of titanium, zirconium, hafnium, vanadium, silicon, niobium, tantalum, nickel, molybdenum and iron, and/or a precursor thereof.

Furthermore, the invention relates to a hydrophobic substrate, in particular made of carbon, coated with an hydrophilic protective layer free of organic carbon and protecting the substrate when used at high temperature, in particular in a cell for the electrowinning of aluminium from alumina dissolved in a fluoride-containing electrolyte. The protective layer is bonded to the substrate through an intermediate bonding layer which comprises dried hydrophilic colloidal particles and/or hydrophilic inorganic polymeric particles.

In accordance with the invention, the dried hydrophilic colloidal/inorganic polymeric particles of the intermediate bonding layer are intimately bonded to carbon on the hydrophobic substrate. The intimate bonding between the hydrophilic colloidal/inorganic polymeric particles and carbon on the hydrophobic substrate is obtainable by applying onto the hydrophobic substrate a slurry comprising the hydrophilic colloidal/inorganic polymeric particles and at least one carbon compound selected from hydrophobic carbon monomers and hydrophobic carbon polymers and comprising hydrophilic substituents in an amount sufficient to bond the hydrophilic colloidal/inorganic polymeric particles to the monomer and/or polymer carbon compound(s).

The intermediate bonding layer and/or the protective layer can comprise dried hydrophilic colloidal/inorganic polymeric particles selected from the above lists.

The intermediate bonding layer and/or the protective layer usually comprises particulate refractory material selected from borides, silicides, nitrides, oxynitrides, carbides, oxycarbides, phosphides, oxides, aluminides of titanium, zirconium, hafnium, vanadium, silicon, niobium, tantalum, nickel, molybdenum and iron, and/or a precursor thereof, in particular particulate titanium diboride.

Advantageously, the intermediate bonding layer and/or the protective layer comprises a particulate refractory metal compound, a dried colloidal metal/inorganic polymeric oxide and a further metal oxide to reinforce the layer(s), the dried colloidal/inorganic polymeric metal oxide and oxide of the metal of the particulate refractory metal compound forming miscible mixed oxides with the reinforcing metal oxide. Suitable combinations of particulate refractory metal compounds, dried colloidal/inorganic polymeric metal oxides and reinforcing metal oxides are disclosed in WO01/42531 (Nguyen/Duruz/de Nora).

The protective layer can comprise an aluminium-wettable metal oxide, such as oxides of manganese, iron, cobalt, nickel, copper, zinc, molybdenum, lanthanum, which when exposed to molten aluminium reacts therewith to produce aluminium oxide and the metal of the aluminium-wettable metal oxide, as disclosed in WO01/42168 (de Nora/Duruz).

The invention also relates to a component of a cell for the electrowinning of aluminium from alumina dissolved in a fluoride-containing electrolyte, comprising a coated substrate as described above, and to a component of an apparatus for treating a molten metal which component during use is exposed to the molten metal and which comprises a coated substrate as described above.

Another aspect of the invention relates to an apparatus for the production, purification or recycling of a metal in a molten state comprising at least one component which comprises a coated substrate as described above, and which during use is exposed to an oxidising and/or corrosive gaseous and/or molten environment at elevated temperature.

The apparatus can be an aluminium electrowinning cell, comprising at least one component which is part of a cell bottom coated with the hydrophilic protective layer protecting the cell bottom component from molten aluminium and/or molten electrolyte; a cathode having an aluminium-wettable surface, in particular a drained surface, formed by the hydrophilic protective layer which protects the cathode from molten aluminium and/or molten electrolyte; an anode having one or more electrochemically inactive surfaces coated with the hydrophilic protective layer which protects the inactive surface from molten electrolyte and/or anodically produced gas; or a cell sidewall coated with the hydrophilic protective layer which protects the sidewall from molten electrolyte, molten aluminium and/or anodically produced gas.

The apparatus may be an arc furnace for the recycling of steel, the component being an arc-electrode or an arc-electrode holder coated with the hydrophilic protective layer which protects it from oxidising gas and/or molten steel.

Furthermore, the apparatus can be an apparatus for the purification or treatment of a molten metal, such as aluminium, molten magnesium, cast iron or molten steel, in particular by the injection of a purifying fluid into the molten metal to remove impurities towards the surface thereof. The component can be a rotatable stirrer or a vessel for containing molten metal to be purified or treated which is protected from the molten metal to be purified or treated and optionally the purifying fluid and impurities of the molten metal by the hydrophilic protective layer. Further details of such a purification or treatment apparatus are disclosed in WO00/63630 (Holz/Duruz).

A further aspect of the invention is a method of producing, purifying, treating or recycling a metal in an apparatus as described above and which comprises at least one component coated with the hydrophilic protective layer. The method comprises exposing the coated substrate to an oxidising and/or corrosive gaseous and/or molten environment at elevated temperature.

Yet a further aspect of the invention relates to a method of bonding a heat stable layer applied from a slurry comprising hydrophilic colloidal particles and/or hydrophilic inorganic polymeric particles onto a hydrophobic substrate for use at high temperature in particular in a cell for the electrowinning of aluminium from alumina. This method comprises: adding to the slurry at least one carbon compound selected from hydrophobic carbon monomers and hydrophobic carbon polymers and which comprises hydrophilic substituents in an amount sufficient to bond the hydrophilic colloidal/inorganic polymeric particles to the carbon compound(s); and thereafter applying one or more layers of the slurry onto the hydrophobic substrate followed by drying and/or heat treating to bond hydrophilic colloidal/inorganic polymeric particles to the hydrophobic substrate by carbon from the carbon compound(s) and thereby bond said heat stable layer on the hydrophobic substrate.

Yet another aspect of the invention relates to the use, in a slurry comprising hydrophilic colloidal particles and/or hydrophilic inorganic polymeric particles for producing upon drying and/or heat treatment a heat stable layer on a hydrophobic substrate for use at high temperature in particular in a cell for the electrowinning of aluminium from alumina, of at least one carbon compound selected from hydrophobic carbon monomers and hydrophobic carbon polymers and which comprises hydrophilic substituents, as an agent for improving bonding of the heat stable layer on the hydrophobic substrate.

### Brief Description of the Drawings

Embodiments of the invention will now be described by way of example with reference to the accompanying schematic drawings, wherein:
- Figure 1 shows a schematic cross-sectional view of an aluminium production cell with carbonaceous drained cathodes having an aluminium-wettable hydrophilic protective layer in accordance with the invention;
- Figure 2 schematically shows an arc electrode furnace incorporating hydrophilic protective layers according to the invention;
- Figure 3 shows an apparatus for the purification of a molten metal having a carbonaceous stirrer protected with an aluminium-wettable hydrophilic protective layer according to the invention;
- Figure 3a is an enlarged schematic sectional view of part of the stirrer shown in Figure 3; and
- Figure 4 schematically shows a variation of the stirrer shown in Figure 3.

### Detailed Description

### Aluminium Electrowinning Cell:

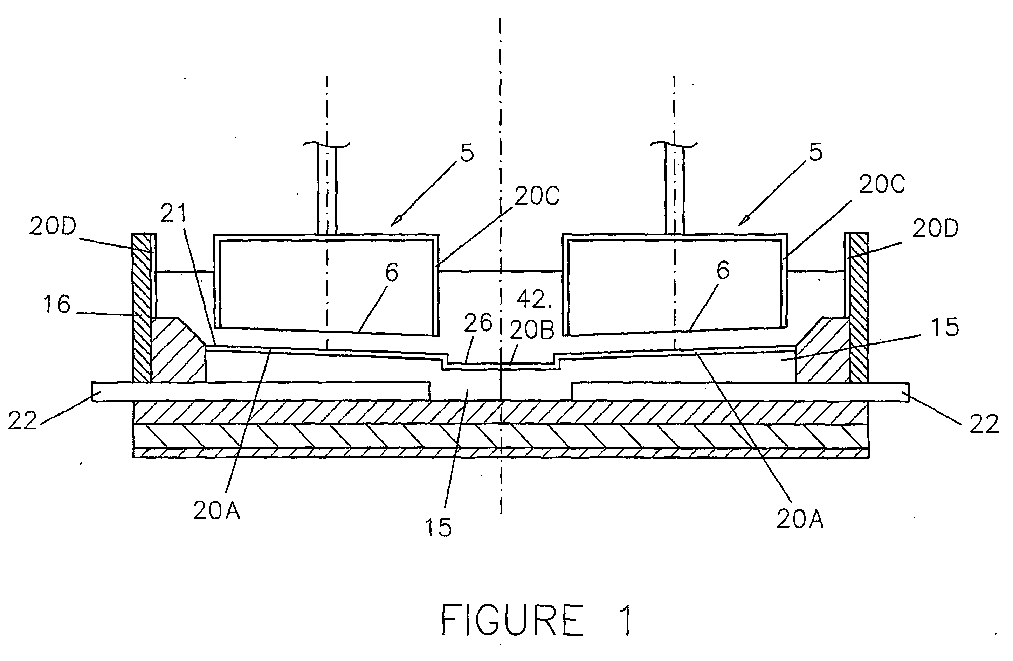

Figure 1 shows an aluminium electrowinning cell comprising a series of carbonaceous anode blocks 5 having operative surfaces 6 suspended over drained sloping flattened generally V-shaped cathode surface 21 in a fluoride-containing molten electrolyte 42 containing dissolved alumina.

The drained cathode surface 21 is formed by the surface of an aluminium-wettable hydrophilic protective layer 20A applied to the upper surfaces of a series of juxtaposed hydrophobic carbon cathode blocks 15 extending in pairs arranged end-to-end across the cell. The protective layer 20A is bonded to the carbon cathode blocks 15 by an intermediate layer applied from compounds according the invention from a slurry comprising hydrophilic colloidal and/or inorganic polymeric particles and one or more monomer and/or polymer carbon.

The cathode blocks 15 comprise, embedded in recesses located in their bottom surfaces, current supply bars 22 of steel or other conductive material for connection to an external electric current supply.

The drained cathode surface 21 is divided by a central aluminium collection groove 26 located in or between pairs of cathode blocks 15 arranged end-to-end across the cell. The aluminium collection groove 26 is situated at the bottom of the drained cathode surface 21 and is arranged to collect the product aluminium draining from the cathode surface 21. The aluminium collection groove 26 is coated according to the invention with an intermediate bonding layer and the aluminium-wettable hydrophilic refractory protective layer 20B.

The anode blocks 5 too are coated with a hydrophilic refractory protective layer 20C on their inactive surfaces, but not on the operative anode surfaces 6 which are immersed as such in the molten electrolyte 42.

The cell comprises carbonaceous sidewalls 16 exposed to molten electrolyte 42 and to the environment above the molten electrolyte, but protected against the molten electrolyte 42 and the environment above the molten electrolyte with a hydrophilic refractory protective layer 20D according to the invention.

In operation of the cell illustrated in Figure 1, alumina dissolved in the molten electrolyte 42 at a temperature of 750° to 960°C is electrolysed between the anodes 5 and the cathode blocks 15 to produce gas on the operative anodes surfaces 6 and molten aluminium on the aluminium-wettable drained cathode layer 20A.

The cathodically-produced molten aluminium flows down the inclined drained cathode surface 21 into the aluminium collection grooves 26 onto the aluminium-wettable hydrophilic protective layer 20B from where it flows into an aluminium collection reservoir for subsequent tapping.

Figure 1 shows a specific aluminium electrowinning cell by way of example. It is evident that many alternatives, modifications, and variations will be apparent to those skilled in the art. For instance, the cell may have one or more aluminium collection reservoirs across the cell, each intersecting the aluminium collection groove to divide the drained cathode surface into four quadrants as described in WO00/63463 (de Nora).

The cell bottom may have a horizontal aluminium-wettable cathode surface which is in a drained configuration or which is covered with a shallow or deep pool of aluminium.

The anodes may be made of inert materials and have an electrochemically active structure of grid-like design to permit electrolyte circulation, as for example disclosed in WO00/40781, WO00/40782 (both in the name of de Nora) and WO01/31086 (de Nora/Duruz).

The anodes may be coated with a protective layer of one or more cerium compounds, in particular cerium oxyfluoride. The protective layers can be maintained by maintaining an amount of cerium species in the electrolyte. Further details of such coatings and cell operation therewith can be found in the US Patents 4,614,569 (Duruz/Derivaz/Debely/Adorian), 4,680,094, 4,683,037 (both in the name of Duruz) and 4,966,674 (Bannochie/Sheriff).

### Arc Furnace:

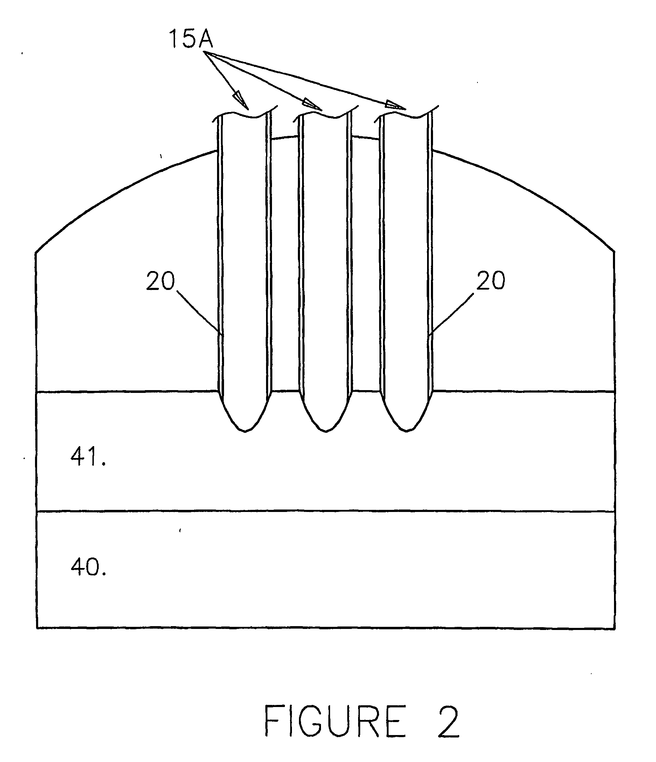

The arc furnace shown in Figure 2 comprises three consumable electrodes 15A arranged in a triangular relationship. For clarity, the distance between the electrodes 15A as shown in Figure 2 has been proportionally increased with respect to the furnace. Typically, the electrodes 15A have a diameter between 200 and 500 mm and can be spaced by a distance corresponding to about their diameter.

The electrodes 15A are connected to an electrical power supply (not shown) and suspended from an electrode positioning system above the cell which is arranged to adjust their height.

The consumable electrodes 15A are made of a hydrophobic carbon substrate laterally coated with a hydrophilic protective layer 20 protecting the carbon substrate from oxidising gas. The protective layer 20 is bonded to the carbon substrate 15A by an intermediate bonding layer applied according to the invention from a slurry comprising hydrophilic colloidal/inorganic polymeric particles and one or more monomer and/or polymer carbon compounds.

The bottom of electrodes 15A which is consumed during operation and constitutes the electrodes' operative surface is uncoated. The hydrophilic protective layer 20 protects only the electrodes' lateral faces against premature oxidation.

The electrodes 15A dip in an iron source 41, usually containing iron oxide or oxidised iron, such as scrap iron, scrap steel and pig iron. Preferably, the iron source 41 further comprises reductants selected from gaseous hydrogen, gaseous carbon monoxide or solid carbon bearing reductants. The reductants may also comprise non-iron minerals known as gangue which include silica, alumina, magnesia and lime.

The iron source 41 floats on a pool of liquid iron or steel 40 resulting from the recycling of the iron source 41.

During use, a three phase AC current is passed through electrodes 15A, which directly reduces iron from the iron source 41. The reduced iron is then collected in the iron or steel pool 40. The gangue contained in the reduced iron is separated from the iron by melting and flotation forming a slag (not shown) which is removed, for example through one or more apertures (not shown) located on sidewalls of the arc furnace at the level of the slag.

The pool of iron or steel 40 is periodically or continuously tapped for instance through an aperture (not shown) located in the bottom of the arc furnace.

### Molten Metal Purification Apparatus:

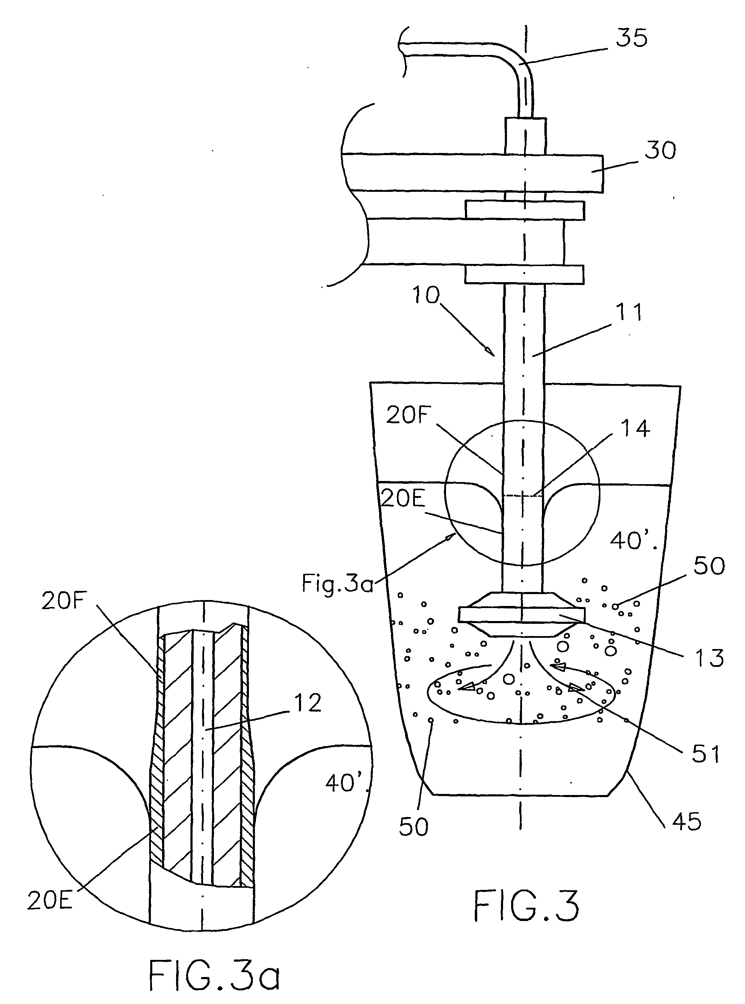

The molten metal purification apparatus partly shown in Figure 3 comprises a vessel 45 containing molten metal 40', such as molten aluminium, to be purified. A rotatable stirrer 10 made of carbon-based material, such as graphite, is partly immersed in the molten metal 40' and is arranged to rotate therein.

The stirrer 10 comprises a shaft 11 whose upper part is engaged with a rotary drive and support structure 30 which holds and rotates the stirrer 10. The lower part of shaft 11 is carbon-based and dips in the molten metal 40' contained in vessel 45. At the lower end of the shaft 11 is a rotor 13 provided with flanges or other protuberances for stirring the molten metal 40'.

Inside the shaft 11, along its length, is an axial duct 12, as shown in Figure 3a, which is connected at the stirrer's upper end through a flexible tube 35 to a gas supply (not shown), for instance a gas reservoir provided with a gas gate leading to the flexible tube 35.

The axial duct 12 is arranged to supply a fluid to the rotor 13. The rotor 13 comprises a plurality of apertures connected to the internal duct 12 for injecting the gas into the molten metal 40', as shown by arrows 51.

The lower part of the shaft 11, i.e. the immersed part and the interface region at or about the meltline 14 of the shaft, as well as the rotor 13 are coated according to the invention with an intermediate bonding layer and a hydrophilic protective layer 20E which improves the resistance to erosion, oxidation and/or corrosion of the stirrer during operation.

As shown in Figure 3, the upper part of shaft 11 is also protected against oxidation and/or corrosion by an intermediate bonding layer and a hydrophilic protective layer 20F according to the invention. The upper part of the carbon-based shaft 11 is coated with a thin layer of refractory material 20F providing protection against oxidation and corrosion, whereas the layer 20E protecting the immersed part of the shaft 11 and the rotor 13 is a thicker layer of refractory material providing protection against erosion, oxidation and corrosion.

Likewise, surfaces of the vessel 45 which come into contact with the molten metal may be protected with an hydrophilic protective layer according to the invention or possibly with a protective layer as described in WO00/63630 (Holz/Duruz) in the case when the vessel is made of hydrophilic material.

During operation of the apparatus shown in Figure 3, a reactive or non-reactive fluid, in particular a gas 50 alone or a flux, such as a halide, nitrogen and/or argon, is injected into the molten metal 40' contained in the vessel 45 through the flexible tube 35 and stirrer 10 which dips in the molten metal 40'.

The stirrer 10 is rotated at a speed of about 100 to 500 RPM so that the injected gas 50 is dispersed throughout the molten metal in finely divided gas bubbles. The dispersed gas bubbles 50, with or without reaction, remove impurities present in the molten metal 40' towards its surface, from where the impurities may be separated thus purifying the molten metal.

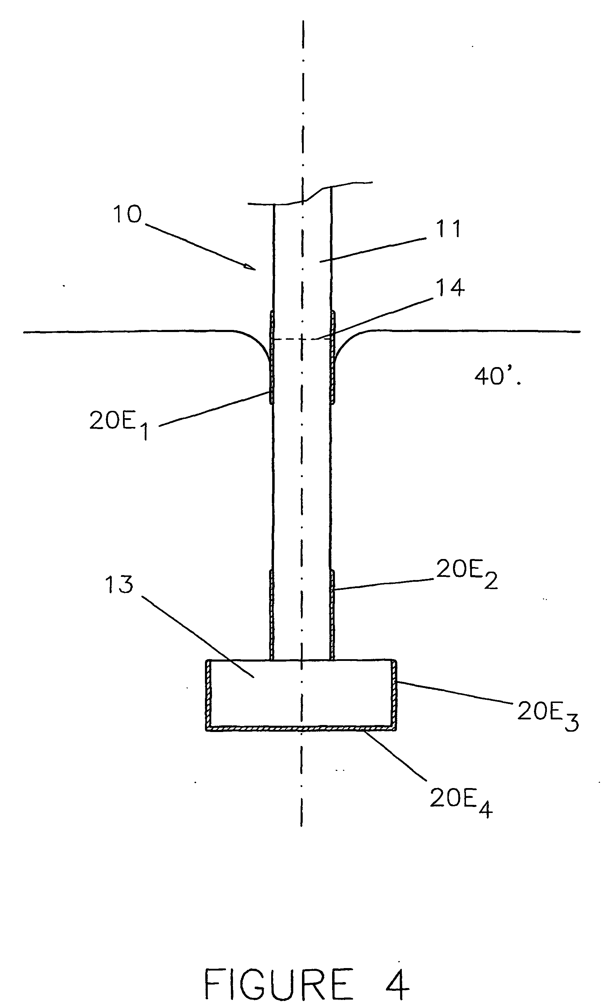

The stirrer 10 schematically shown in Figure 4 dips in a molten metal bath 40' and comprises a shaft 11 and a rotor 13. The stirrer 10 may be of any type, for example similar to the stirrer shown in Figure 3 or of conventional design as known from the prior art. The rotor 13 of stirrer 10 may be a high-shear rotor or a pump action rotor.

In Figure 4, instead of coating the entire shaft 11 and rotor 13, parts of the stirrer 10 liable to erosion are selectively coated with an intermediate bonding layer and an aluminium-wettable protective layer according to the invention.

The interface portion at and about the meltline 14 of the carbon-based lower part of the shaft 11 is coated with a refractory interface layer 20E₁ consisting of an intermediate bonding layer and a hydrophilic protective layer according to the invention, for instance over a length of up to half that of the shaft 11. Excellent results have been obtained with a layer over a third of shaft 11. However, the length of layer 20E₁ could be a quarter of the length of shaft 11 or even less, depending on the design of stirrer 10 and the operating conditions.

In addition to the interface portion of such stirrers, other areas may be liable to erode, again depending on the design and operating conditions of the stirrers. The schematically shown stirrer 10 in Figure 4 illustrates further coated surfaces which are particularly exposed to erosion. The lower end of the shaft 11 adjacent to the rotor 13 is protected with a layer 20E₂ consisting of an intermediate bonding layer and a hydrophilic protective layer according to the invention. The lateral surface of rotor 13 is protected with a layer 20E₃ and the bottom surface of the rotor 13 is coated with a layer 20E₄, both consisting of an intermediate bonding layer and a hydrophilic protective layer according to the invention.

For each specific stirrer design, the layer or different protective layers on different parts of the stirrer, such as layers 20E₁, 20E₂, 20E₃ and 20E₄ shown in Figure 4, may be adapted as a function of the expected lifetime of the stirrer. For optimal use, the amount and location of such layers can be so balanced that they each have approximately the same lifetime.

In an alternative embodiment (not shown), the layer on such stirrers may be continuous as illustrated in Figure 3 but with a graded thickness or composition so as to adapt the resistance against erosion to the intensity of wear of each part of the stirrer, thereby combining the advantages of the different layers shown in Figure 4.

Various modifications can be made to the apparatus shown in Figures 3, 3a and 4. For instance, the shaft shown in Figure 3 may be modified so as to consist of an assembly whose non-immersed part is made of a material other than carbon-based, such as a metal and/or a ceramic, which is resistant to oxidation and corrosion and which, therefore, does not need any protective layer, whereas the immersed part of the shaft is made of carbon-based material protected with a protective layer according to the invention. Such a composite shaft would preferably be designed to permit disassembly of the immersed and non-immersed parts so the immersed part can be replaced when worn.

Likewise, a carbon-based non-immersed part of the shaft may be protected from oxidation and corrosion with a layer and/or impregnation of a phosphate of aluminium, in particular applied in the form of a compound selected from monoaluminium phosphate, aluminium phosphate, aluminium polyphosphate, aluminium metaphosphate, and mixtures thereof as disclosed in US Patent 5,534,119 (Sekhar). It is also possible to protect the non-immersed part of the shaft with a layer and/or impregnation of a boron compound, such as a compound selected from boron oxide, boric acid and tetraboric acid as disclosed in US Patent 5,486,278 (Manganiello/Duruz/Bellò) and in copending application WO97/26626 (de Nora/Duruz/Berclaz).

In a modification, the protective layer of the invention may simply be applied to any part of the stirrer in contact with the molten metal, to be protected against erosion, oxidation and/or corrosion during operation.

The invention will be further described in the following examples.

### Example 1

A slurry for use as an intermediate bonding layer for bonding a hydrophilic protective layer onto a hydrophobic substrate according to the invention was prepared as follows.

A refractory hard metal boride consisting of 47.5 g surface-oxidised particulate spherical TiB₂ (-325 mesh) having a TiO₂ surface film and a particulate reinforcing metal oxide in the form of 2.5 g TiO₂ (-325 mesh) were stirred and suspended in a colloidal carrier consisting of 20 ml colloidal Al₂O₃ (NYACOL® Al-20, a milky liquid with a colloidal particle size of about 40 to 60 nanometer) to form an colloidal slurry.

After the particulate titanium diboride and oxide had been suspended in the colloidal carrier, an amount of 1 ml of an aqueous solution containing 15 weight% polyvinyl alcohol (PVA), a hydrophobic carbon polymer comprising hydrophilic substituents (-OH), was added to the colloidal slurry.

This slurry produces upon heat treatment an oxide matrix of titanium-aluminium mixed oxide from the reaction of the colloidal oxide Al₂O₃ and TiO₂ present as suspended oxide particles and oxide film covering the suspended TiB₂ particles intimately mixed with carbon from the hydrophobic carbon polymer. The oxide matrix contains and bonds TiB₂ particles.

This slurry is suitable for the manufacture of a composite coating according to the invention as described in Example 4.

### Example 1a

The constituents of the slurry of Example 1 may be changed as shown in the following Table in which each line represents possible combinations of constituents which are combined with one or more carbon compounds in the form of hydrophobic carbon monomers and/or polymers that comprise hydrophilic substituents, such as ethylene glycol, hexanol, polyvinyl alcohol, polyvinyl acetate, polyacrylic acid, hydroxy propyl methyl cellulose and ammonium polymethacrylate.

| Colloidal and Polymeric Oxides | Suspended Reinforcing Metal Oxides | Suspended Surface-Oxidised Refractory Metal Compounds |
|---|---|---|
| Al₂O₃ | TiO₂, MgO or SiO₂ | TiB₂, SiC, TiC or TiN |
| TiO₂ | Al₂O₃ or MgO | SiC or SiN |
| SiO₂ | Al₂O₃ or MgO | TiB₂, TiC or TiN |

In a variation, the suspended refractory metal compound does not need to be surface oxidised and the suspended reinforcing metal oxide may be replaced by the suspended surface-oxidised refractory metal compounds in the same weight percentage.

### Example 2

A slurry for producing an hydrophilic protective layer free of organic carbon which can be bonded through an intermediate bonding layer to a hydrophobic substrate in accordance with the invention was prepared by suspending 2.5 g particulate Fe₂O₃ (-325 mesh), a refractory hard metal boride consisting of 92.5 g particulate needle-shaped surface-oxidised TiB₂ (-325 mesh) having a TiO₂ surface oxide film, and 2.5 g particulate TiO₂ (-325 mesh) in a colloid consisting of a combination of two grades of colloidal Al₂O₃, namely 28 ml of a first grade of colloidal Al₂O₃ (NYACOL® Al-20, a milky liquid with a colloidal particle size of about 40 to 60 nanometer) and 24 ml of a second grade of colloidal Al₂O₃ (CONDEA® 10/2 Sol, a clear, opalescent liquid with a colloidal particle size of about 10 to 30 nanometer).

This slurry produces upon heat treatment a matrix of mixed oxides consisting of titanium-aluminium mixed oxide and a small amount of iron-titanium-aluminium mixed oxide from the reaction of TiO₂, Fe₂O₃ and Al₂O₃. This matrix contains and bonds the TiB₂ and Fe₂O₃ particles.

This slurry is suitable for the manufacture of a composite coating according to the invention as described in Example 4.

### Example 2a

Example 2's slurry composition consists of Fe₂O₃ and a reaction mixture made of the colloid (Al₂O₃), the suspended refractory metal boride (TiB₂) the suspended metal oxide (TiO₂). This Example can be modified by completely or partly substituting Fe₂O₃ with partly oxidised or oxides of copper and/or nickel, and/or by varying the composition of the reaction mixture as in Example 1a.

### Example 3

A further slurry for producing a highly aluminium-wettable hydrophilic protective start-up layer free of organic carbon which can be bonded through an intermediate bonding layer to a hydrophobic substrate in accordance with the invention, was prepared as follows. An amount of 60 g of surface oxidised copper particles (-325 mesh) was suspended in a carrier consisting of 13 ml of colloidal Al₂O₃ (7 ml NYACOL® Al-20, a milky liquid with a colloidal particle size of about 40 to 60 nanometer and 6 ml CONDEA® 10/2 Sol, a clear, opalescent liquid with a colloidal particle size of about 10 to 30 nanometer).

Upon heat treatment the slurry produces an alumina matrix containing and bonding the oxidised copper particles.

As a modification, oxidised or partly oxidised particles of nickel and/or iron may be used to substitute in part or completely the oxidised copper particles in colloidal alumina (CONDEA 25/5 with a pH > 7).

### Example 4

Three carbon cathodes for use in a drained cell for the production of aluminium were each coated with the slurries of Examples 1, 2 and 3 as follows:

First, an intermediate bonding layer having a thickness of about 100 micron was painted onto the exposed surface of the hydrophobic carbon cathode from the slurry of Example 1. The intermediate bonding layer was allowed to dry for 30 minutes.

The intermediate bonding layer was covered with a permanent aluminium-wettable hydrophilic protective layer obtained by painting 8 layers of the slurry of Example 2. Each applied layer was allowed to dry for 30 minutes before application of the next layer. The final aluminium-wettable protective layer had a thickness of about 1.8 mm.

The permanent aluminium-wettable hydrophilic protective layer was then covered with a temporary hydrophilic protective start-up layer obtained by painting one layer of the slurry of Example 3. The hydrophilic start-up layer had a thickness of about 100 to 150 micron.

The coating formed by the intermediate bonding layer, the permanent aluminium-wettable hydrophilic protecting layer and the temporary hydrophilic protective start-up layer on the carbon cathode was allowed to dry for 24 hours.

Two of the three cathodes were then covered with an aluminium sheet having a thickness of about 1.5 cm and heated in an oven at a temperature of about 850-900°C in air.

The first cathode was extracted from the oven after 30 minutes and allowed to cool down to ambient temperature. Examination of a cross-section of the coating showed that aluminium had infiltrated the start-up layer so that the coating was superficially wetted by molten aluminium. No reaction between aluminium and iron oxide had yet taken place. The intermediate bonding layer was intimately bonded to the hydrophobic carbon substrate.

The second cathode was extracted from the oven after 24 hours and allowed to cool down to ambient temperature. Examination of a cross-section of the coating showed that aluminium had infiltrated the start-up layer and the permanent aluminium-wettable layer. Part of the aluminium had reacted with Fe₂O₃ to form Al₂O₃ and Fe metal. Aluminium infiltration had been stopped on the intermediate bonding layer for lack of oxide reactable with aluminium.

The aluminium metal infiltration into the start-up layer and the permanent aluminium-wettable layer enhanced the conductivity of the coating. At ambient temperature, the perpendicular electrical resistance through the coating was less than 1 ohm after infiltration versus more than 500 ohm before infiltration.

The coatings on both cathodes showed a continuous matrix of titanium-aluminium mixed oxides between the intermediate bonding layer and the permanent aluminium-wettable layer which guarantees an excellent adherence between the two layers. In both cases the particles of TiB₂ had not been oxidised by the heat treatment and wettability of the coating by aluminium was very good. The angle of wettability was less than 10 deg.

The third coated carbon cathode was used in an aluminium production drained cell as follows:

The cathode covered with the dried coating according to the invention was covered in the cell with a 1.5 cm thick sheet of aluminium. The cell was heated to a temperature of about 850-900°C by passing an electrical current between the cathode and facing anodes through carbon powder. Other start-up heating procedures could also have been used, e.g. using gas burners to generate heat.

After 30 minutes at 850-900°C, the start-up coating was superficially wetted by molten aluminium which constitutes a barrier against damaging fluoride-based molten electrolyte constituents, such as sodium compounds, and a cryolite based electrolyte was filled into the cell.

The cell was further heated to 960°C at which temperature the cell was operated under an electrolysis current density of 0.8 A/cm² to produce aluminium under conventional steady state conditions.

### Example 5

Any of the layers of Examples 1 to 4 can be modified using inorganic polymeric carriers, such as the polymeric solutions (A) and (B) prepared as set out below, in replacement of the layer's colloidal carriers.
(A) An amount of 150 g of Fe(NO₃)₃.9 H₂O was heated to dissolve the salt in its own water of crystallisation to form a solution containing 29 g Fe₂O₃. The solution was heated to 120°C and 18.9 g of magnesium hydroxy-carbonate dissolved in the hot solution to form 7.5 g MgO in form of an inorganic polymer together with Fe₂O₃ suitable for use as an inorganic polymeric carrier.
(B) An amount of 100 g of Cr(NO₃)₃.9 H₂O was heated to dissolve the salt in its own water of crystallisation to form a solution containing 19 g Cr₂O₃. The solution was heated to 120°C and 12.5 g of magnesium-hydroxy carbonate containing the equivalent of 5.0 g MgO was added. Upon stirring a solution was obtained in the form of an anion-deficient polymer mixture with a density of approximately 1.5 g/cm³ suitable to act as an inorganic polymeric carrier.

## Claims

1. A method of coating a hydrophobic substrate with an hydrophilic protective layer free of organic carbon to protect the substrate when used at high temperature in particular in a cell for the electrowinning of aluminium from alumina dissolved in a fluoride-containing electrolyte, said method comprising:
- applying one or more layers of a slurry comprising hydrophilic colloidal particles and/or hydrophilic inorganic polymeric particles onto the hydrophobic substrate followed by drying to form a heat stable intermediate bonding layer on the hydrophobic substrate; and
- applying one or more layers of a slurry forming the hydrophilic protective layer onto the intermediate bonding layer followed by drying and/or heat treating to form the hydrophilic protective layer on the intermediate bonding layer,
**characterised in that** the slurry forming the intermediate bonding layer contains at least one carbon compound selected from hydrophobic carbon monomers and hydrophobic carbon polymers and comprising hydrophilic substituents in an amount sufficient to bond said hydrophilic colloidal and/or inorganic polymeric particles to the carbon compound(s).

2. The method of claim 1, wherein said hydrophilic substituents are selected from -OH, -SO₃Na and -COOH, and combinations thereof.

3. The method of claim 1 or 2, wherein said carbon compound(s) has/have a carbon/hydrophilic substituent ratio in the range of 2 to 4.

4. The method of any preceding claim, wherein said carbon compound(s) is/are selected from ethylene glycol, hexanol, polyvinyl alcohol, polyvinyl acetate, polyacrylic acid, hydroxy propyl methyl cellulose and ammonium polymethacrylate and mixtures thereof.

5. The method of any preceding claim, wherein said hydrophilic protective layer is applied from a slurry comprising colloidal and/or inorganic polymeric particles and non-dispersed particulate refractory material.

6. The method of any preceding claim, wherein at least one of the slurry forming the intermediate bonding layer and the slurry forming the hydrophilic protective layer comprises hydrophilic colloidal particles selected from lithia, beryllium oxide, magnesia, alumina, silica, titania, vanadium oxide, chromium oxide, manganese oxide, iron oxide, gallium oxide, yttria, zirconia, niobium oxide, molybdenum oxide, ruthenia, indium oxide, tin oxide, tantalum oxide, tungsten oxide, thallium oxide, ceria, hafnia and thoria, and precursors thereof, all in the form of colloids; and/or hydrophilic inorganic polymeric particles selected from lithia, beryllium oxide, alumina, silica, titania, chromium oxide, iron oxide, nickel oxide, gallium oxide, zirconia, niobium oxide, ruthenia, indium oxide, tin oxide, hafnia, tantalum oxide, ceria and thoria, and precursors thereof, all in the form of inorganic polymers.

7. The method of any preceding claim, wherein the slurry forming the intermediate bonding layer further comprises non-dispersed particulate refractory material or a particulate precursor thereof.

8. The method of claim 7, wherein the slurry forming the intermediate bonding layer further comprises particulate carbon.

9. The method of any preceding claim, wherein at least one of the slurry forming the intermediate bonding layer and the slurry forming the hydrophilic protective layer comprises non-dispersed particulate refractory material selected from borides, silicides, nitrides, oxynitrides, carbides, oxycarbides, phosphides, oxides, aluminides, of titanium; zirconium, hafnium, vanadium, silicon, niobium, tantalum, nickel, molybdenum and iron, and/or a precursor thereof.

10. The method of any preceding claim, wherein the hydrophobic substrate is made of carbon.

11. A hydrophobic substrate coated with an hydrophilic protective layer free of organic carbon protecting the substrate when used at high temperature, in particular in a cell for the electrowinning of aluminium from alumina dissolved in a fluoride-containing electrolyte, wherein the protective layer is bonded to the substrate through an intermediate bonding layer which comprises dried hydrophilic colloidal particles and/or dried hydrophilic inorganic polymeric particles,
**characterised in that** dried hydrophilic colloidal and/or inorganic polymeric particles of the intermediate bonding layer are intimately bonded to carbon on the hydrophobic substrate, the intimate bonding between the hydrophilic colloidal and/or inorganic polymeric particles and carbon on the hydrophobic substrate being obtainable by applying onto the hydrophobic substrate a slurry comprising the hydrophilic colloidal and/or inorganic polymeric particles and at least one carbon compound selected from hydrophobic carbon monomers and hydrophobic carbon polymers and comprising hydrophilic substituents in an amount sufficient to bond the hydrophilic colloidal and/or inorganic polymeric particles to the carbon compound(s).

12. The coated substrate of claim 11, wherein at least one of the intermediate bonding layer and the hydrophilic protective layer comprises dried hydrophilic lithia, beryllium oxide, magnesia, alumina, silica, titania, vanadium oxide, chromium oxide, manganese oxide, iron oxide, gallium oxide, yttria, zirconia, niobium oxide, molybdenum oxide, ruthenia, indium oxide, tin oxide, tantalum oxide, tungsten oxide, thallium oxide, ceria, hafnia and thoria, and precursors thereof, all in the form of colloids; and/or hydrophilic inorganic polymeric particles selected from lithia, beryllium oxide, alumina, silica, titania, chromium oxide, iron oxide, nickel oxide, gallium oxide, zirconia, niobium oxide, ruthenia, indium oxide, tin oxide, hafnia, tantalum oxide, ceria and thoria, and precursors thereof, all in the form of inorganic polymers.

13. The coated substrate of claim 11 or 12, wherein at least one of the intermediate bonding layer and the hydrophilic protective layer comprises particulate refractory material selected from borides, silicides, nitrides, oxynitrides, carbides, oxycarbides, phosphides, oxides, aluminides, of titanium, zirconium, hafnium, vanadium, silicon, niobium, tantalum, nickel, molybdenum and iron, and/or a precursor thereof.

14. The coated substrate of claim 13, wherein at least one of the intermediate bonding layer and the hydrophilic protective layer comprises particulate titanium diboride.

15. The coated substrate of any preceding, wherein at least one of the intermediate bonding layer and the hydrophilic protective layer comprises a particulate refractory metal compound, a dried colloidal metal and/or inorganic polymeric oxide and a further metal oxide to reinforce said layer(s), the dried colloidal and/or inorganic polymeric metal oxide and oxide of the metal of the particulate refractory metal compound forming miscible mixed oxides with the reinforcing metal oxide.

16. The coated substrate of any one of claims 11 to 15, wherein the hydrophilic protective layer comprises an aluminium-wettable metal oxide which when exposed to molten aluminium reacts therewith to produce aluminium oxide and the metal of the aluminium-wettable metal oxide.

17. The coated substrate of claim 16, wherein the aluminium-wettable metal oxide is selected from oxides of manganese, iron, cobalt, nickel, copper, zinc, molybdenum, lanthanum and combinations thereof.

18. The coated substrate of any one of claims 11 to 17, wherein the hydrophobic substrate is made of carbon.

19. A component of a cell for the electrowinning of aluminium from alumina dissolved in a fluoride-containing electrolyte, comprising a coated substrate as defined in any one of claims 11 to 18.

20. A component of an apparatus for treating a molten metal which component during use is exposed to the molten metal, comprising a coated substrate as defined in any one of claims 11 to 18.

21. An apparatus for the production, purification or recycling of a metal in a molten state comprising at least one component which comprises a coated substrate as defined in any one of claims 11 to 18, and which during use is exposed to an oxidising and/or corrosive gaseous and/or molten environment at elevated temperature.

22. The apparatus of claim 21, which is an aluminium electrowinning cell, comprising at least one component which is part of a cell bottom coated with said hydrophilic protective layer protecting the cell bottom component from molten aluminium and/or molten electrolyte; a cathode having an aluminium-wettable surface formed by the hydrophilic protective layer which protects the cathode from molten aluminium and/or molten electrolyte; an anode having one or more electrochemically inactive surfaces coated with said hydrophilic protective layer which protects the inactive surface from at least one of molten electrolyte and anodically produced gas; or a cell sidewall coated with said hydrophilic protective layer which protects the sidewall from at least one of molten electrolyte, molten aluminium and anodically produced gas.

23. The apparatus of claim 22, wherein said component is a cathode which has an aluminium-wettable drained surface.

24. The apparatus of claim 21, which is an arc furnace for the recycling of steel, said component being an arc-electrode or an arc-electrode holder coated with the hydrophilic protective layer which protects it from oxidising gas and/or molten steel.

25. The apparatus of claim 21, which is an apparatus for the purification or treatment of a molten metal, in particular by the injection of a purifying fluid into the molten metal to remove impurities towards the surface thereof, said component being a rotatable stirrer or a vessel for containing molten metal to be purified or treated, which component is protected from the molten metal to be purified or treated and optionally the purifying fluid and impurities of the molten metal by the hydrophilic protective layer.

26. The apparatus of claim 25, which is an apparatus for the purification of molten aluminium, molten magnesium, cast iron or molten steel.

27. A method of producing, purifying or recycling a metal in an apparatus as defined in any one of claims 21 to 26, which apparatus comprises at least one component coated with said hydrophilic protective layer, the method comprising exposing said coated substrate to an oxidising and/or corrosive gaseous and/or molten environment at elevated temperature.

28. A method of bonding a heat stable layer applied from a slurry comprising hydrophilic colloidal particles and/or hydrophilic inorganic polymeric particles onto a hydrophobic substrate for use at high temperature in particular in a cell for the electrowinning of aluminium from alumina, said method comprising:
- adding to the slurry at least one carbon compound selected from hydrophobic carbon monomers and hydrophobic carbon polymers and which comprises hydrophilic substituents in an amount sufficient to bond the hydrophilic colloidal and/or inorganic polymeric particles to the carbon compound(s); and thereafter
- applying one or more layers of the slurry onto the hydrophobic substrate followed by drying and/or heat treating,
wherein said at least one carbon compound is used as an agent to bond hydrophilic colloidal and/or inorganic polymeric particles to the hydrophobic substrate by carbon from the carbon compound(s) and thereby bond said heat stable layer on the hydrophobic substrate.

29. Use, in a slurry comprising hydrophilic colloidal particles and/or hydrophilic inorganic polymeric particles for producing upon drying and/or heat treatment a heat stable layer on a hydrophobic substrate for use at high temperature in particular in a cell for the electrowinning of aluminium from alumina,
of at least one carbon compound selected from hydrophobic carbon monomers and hydrophobic carbon polymers and which comprises hydrophilic substituents, as an agent to bond hydrophilic colloidal and/or inorganic polymeric particles to the hydrophobic substrate by carbon from the carbon compound(s) and thereby bond said heat stable layer on the hydrophobic substrate.

## Patentansprüche

1. Verfahren zum Beschichten eines hydrophoben Substrats mit einer hydrophilen Schutzschicht, die frei von organischem Kohlenstoff ist, zum Schutz des Substrats, wenn es bei hoher Temperatur insbesondere in einer Zelle zur elektrolytischen Gewinnung von Aluminium aus Aluminiumoxid verwendet wird, das in einem fluoridhaltigen Elektrolyten gelöst ist, bei dem
- eine oder mehrere Schichten aus einer Aufschlämmung, die hydrophile kolloidale Partikel und/oder hydrophile anorganische polymere Partikel umfasst, auf das hydrophobe Substrat aufgebracht und anschließend getrocknet werden, um eine wärmebeständige Zwischen-Bindeschicht auf dem hydrophoben Substrat zu bilden; und
- eine oder mehrere Schichten aus einer Aufschlämmung, die die hydrophile Schutzschicht bildet, auf die Zwischen-Bindeschicht aufgebracht und anschließend getrocknet und/oder wärmebehandelt werden, um die hydrophile Schutzschicht auf der Zwischen-Bindeschicht zu bilden,
**dadurch gekennzeichnet, dass** die Aufschlämmung, die die Zwischen-Bindeschicht bildet, mindestens eine Kohlenstoffverbindung ausgewählt aus hydrophoben Kohlenstoffmonomeren und hydrophoben Kohlenstoffmonomeren enthält und hydrophile Substituenten in einer ausreichenden Menge enthält, um die hydrophilen kolloidalen und/oder anorganischen polymeren Partikel an die Kohlenstoffverbindung(en) zu binden.

2. Verfahren nach Anspruch 1, bei dem die hydrophilen Substituenten ausgewählt sind aus -OH, -SO₃Na und -COOH und Kombinationen davon.

3. Verfahren nach Anspruch 1 oder 2, bei dem die Kohlenstoffverbindung(en) ein Verhältnis von Kohlenstoff/hydrophile Substituenten im Bereich von 2 bis 4 hat bzw. haben.

4. Verfahren nach einem der vorhergehenden Ansprüche, bei dem die Kohlenstoffverbindung(en) ausgewählt ist bzw. sind aus Ethylenglykol, Hexanol, Polyvinylalkohol, Polyvinylacetat, Polyacrylsäure, Hydroxypropylmethylcellulose und Ammoniumpolymethacrylat und Mischungen davon.

5. Verfahren nach einem der vorhergehenden Ansprüche, bei dem die hydrophile Schutzschicht aus einer Aufschlämmung aufgebracht wird, die kolloidale und/oder anorganische polymere Partikel und nicht-dispergiertes partikuläres hitzebeständiges Material umfasst.

6. Verfahren nach einem der vorhergehenden Ansprüche, bei dem mindestens eine der Aufschlämmungen, die die Zwischen-Bindeschicht bzw. die die hydrophile Schutzschicht bilden, hydrophile kolloidale Partikel ausgewählt aus Lithiumoxid, Berylliumoxid, Magnesiumoxid, Aluminiumoxid, Siliciumdioxid, Titandioxid, Vanadiumoxid, Chromoxid, Manganoxid, Eisenoxid, Galliumoxid, Yttriumoxid, Zirkoniumdioxid, Nioboxid, Molybdänoxid, Rutheniumoxid, Indiumoxid, Zinnoxid, Tantaloxid, Wolframoxid, Thalliumoxid, Ceroxid, Hafniumoxid und Thoriumoxid und Vorläufern davon, alle in Form von Kolloiden, und/oder hydrophile anorganische polymere Partikel ausgewählt aus Lithiumoxid, Berylliumoxid, Aluminiumoxid, Siliciumdioxid, Titandioxid, Chromoxid, Eisenoxid, Nickeloxid, Galliumoxid, Zirkoniumdioxid, Nioboxid, Rutheniumoxid, Indiumoxid, Zinnoxid, Hafniumoxid, Tantaloxid, Ceroxid und Thoriumoxid und Vorläufern davon, alle in Form anorganischer Polymere, umfasst.

7. Verfahren nach einem der vorhergehenden Ansprüche, bei dem die Aufschlämmung, die die Zwischen-Bindeschicht bildet, ferner nicht-dispergiertes partikuläres hitzebeständiges Material oder partikulären Vorläufer davon umfasst.

8. Verfahren nach Anspruch 7, bei dem die Aufschlämmung, die die Zwischen-Bindeschicht bildet, ferner partikulären Kohlenstoff umfasst.

9. Verfahren nach einem der vorhergehenden Ansprüche, bei dem mindestens eine der Aufschlämmungen, die die Zwischen-Bindeschicht bzw. die die hydrophile Schutzschicht bilden, nicht-dispergiertes partikuläres hitzebeständiges Material ausgewählt aus Boriden, Siliciden, Nitriden, Oxynitriden, Carbiden, Oxycarbiden, Phosphiden, Oxiden, Aluminiden von Titan, Zirkonium, Hafnium, Vanadium, Silicium, Niob, Tantal, Nickel, Molybdän und Eisen und/oder einem Vorläufer davon umfasst.

10. Verfahren nach einem der vorhergehenden Ansprüche, bei dem das hydrophobe Substrat aus Kohlenstoff hergestellt ist.

11. Hydrophobes Substrat, das mit einer hydrophilen Schutzschicht beschichtet ist, die frei von organischem Kohlenstoff ist, die das Substrat schützt, wenn es bei hoher Temperatur insbesondere in einer Zelle zur elektrolytischen Gewinnung von Aluminium aus Aluminiumoxid verwendet wird, das in einem fluoridhaltigen Elektrolyten gelöst ist, wobei die Schutzschicht über eine Zwischen-Bindeschicht an das Substrat gebunden ist, die getrocknete hydrophile kolloidale Partikel und/oder getrocknete hydrophile anorganische polymere Partikel umfasst,
**dadurch gekennzeichnet, dass** die getrockneten hydrophilen kolloidalen und/oder anorganischen polymeren Partikel der Zwischen-Bindeschicht innig an Kohlenstoff auf dem hydrophoben Substrat gebunden sind, wobei die innige Bindung zwischen den hydrophilen kolloidalen und/oder anorganischen polymeren Partikeln und Kohlenstoff auf dem hydrophoben Substrat erhältlich ist, indem auf das hydrophobe Substrat eine Aufschlämmung aufgebracht wird, die die hydrophilen kolloidalen und/oder anorganischen polymeren Partikel und mindestens eine Kohlenstoffverbindung ausgewählt aus hydrophoben Kohlenstoffmonomeren und hydrophoben Kohlenstoffpolymeren umfasst und hydrophile Substituenten in einer ausreichenden Menge umfasst, um die hydrophilen kolloidalen und/oder anorganischen Polymerpartikel an die Kohlenstoffverbindung(en) zu binden.

12. Beschichtetes Substrat nach Anspruch 11, bei dem mindestens eine der Zwischen-Bindeschicht und der hydrophilen Schutzschicht getrocknetes hydrophiles Lithiumoxid, Berylliumoxid, Magnesiumoxid, Aluminiumoxid, Siliciumdioxid, Titandioxid, Vanadiumoxid, Chromoxid, Manganoxid, Eisenoxid, Galliumoxid, Yttriumoxid, Zirkoniumdioxid, Nioboxid, Molybdänoxid, Rutheniumoxid, Indiumoxid, Zinnoxid, Tantaloxid, Wolframoxid, Thalliumoxid, Ceroxid, Hafniumoxid und Thoriumoxid und Vorläufer davon, alle in Form von Kolloiden, und/oder hydrophile anorganische polymere Partikel ausgewählt aus Lithiumoxid, Berylliumoxid, Aluminiumoxid, Siliciumdioxid, Titandioxid, Chromoxid, Eisenoxid, Nickeloxid, Galliumoxid, Zirkoniumdioxid, Nioboxid, Rutheniumoxid, Indiumoxid, Zinnoxid, Hafniumoxid, Tantaloxid, Ceroxid und Thoriumoxid und Vorläufern davon, alle in Form anorganischer Polymere, umfasst.

13. Beschichtetes Substrat nach Anspruch 11 oder 12, bei dem mindestens eine der Zwischen-Bindeschicht und der hydrophilen Schutzschicht partikuläres hitzebeständiges Material ausgewählt aus Boriden, Siliciden, Nitriden, Oxynitriden, Carbiden, Oxycarbiden, Phosphiden, Oxiden, Aluminiden von Titan, Zirkonium, Hafnium, Vanadium, Silicium, Niob, Tantal, Nickel, Molybdän und Eisen und/oder einem Vorläufer davon umfasst.

14. Beschichtetes Substrat nach Anspruch 13, bei dem mindestens eine der Zwischen-Bindeschicht und der hydrophilen Schutzschicht partikuläres Titandiborid umfasst.

15. Beschichtetes Substrat nach einem der vorhergehenden Ansprüche, bei dem mindestens eine der Zwischen-Bindeschicht und der hydrophilen Schutzschicht eine partikuläre hitzebeständige Metallverbindung, ein getrocknetes kolloidales Metall und/oder anorganisches polymeres Oxid und ein weiteres Metalloxid zur Verstärkung der Schicht(en) umfasst, wobei das getrocknete kolloidale und/oder anorganische polymere Metalloxid und das Oxid des Metalls der partikulären hitzebeständigen Metallverbindung mischbare gemischte Oxide mit dem Verstärkungsmetalloxid bilden.

16. Beschichtetes Substrat nach einem der Ansprüche 11 bis 15, bei dem die hydrophile Schutzschicht ein aluminiumbenetzbares Metalloxid umfasst, das, wenn es geschmolzenem Aluminium ausgesetzt wird, mit diesem unter Bildung von Aluminiumoxid und dem Metall des aluminiumbenetzbaren Metalloxids reagiert.

17. Beschichtetes Substrat nach Anspruch 16, bei dem das aluminiumbenetzbare Metalloxid ausgewählt ist aus Oxiden von Mangan, Eisen, Kobalt, Nickel, Kupfer, Zink, Molybdän, Lanthan und Kombinationen davon.

18. Beschichtetes Substrat nach einem der Ansprüche 11 bis 17, bei dem das hydrophobe Substrat aus Kohlenstoff hergestellt ist.

19. Komponente einer Zelle zur elektrolytischen Gewinnung von Aluminium aus Aluminiumoxid, das in einem fluoridhaltigen Elektrolyt gelöst ist, die ein beschichtetes Substrat wie in einem der Ansprüche 11 bis 18 definiert umfasst.

20. Komponente einer Vorrichtung zur Behandlung von geschmolzenem Metall, wobei die Komponente während des Gebrauchs dem geschmolzenen Metall ausgesetzt ist, die ein beschichtetes Substrat wie in einem der Ansprüche 11 bis 18 definiert umfasst.

21. Vorrichtung zur Produktion, Reinigung oder zum Recycling eines Metall in geschmolzenem Zustand, die mindestens eine Komponente umfasst, die beschichtetes Substrat wie in einem der Ansprüche 11 bis 18 definiert umfasst, und die während des Gebrauchs einer oxidierenden und/oder korrosiven gasförmigen und/oder geschmolzenen Umgebung bei erhöhter Temperatur ausgesetzt ist.

22. Vorrichtung nach Anspruch 21, die eine Zelle zur elektrolytischen Gewinnung von Aluminium ist, die mindestens eine Komponente, die Teil eines Zellbodens ist und mit der hydrophilen Schutzschicht beschichtet ist, die die Zellbodenkomponente vor geschmolzenem Aluminium und/oder geschmolzenem Elektrolyten schützt; eine Katode mit einer aluminiumbenetzbaren Oberfläche, die aus der hydrophilen Schutzschicht gebildet ist, die die Katode vor geschmolzenem Aluminium und/oder geschmolzenem Elektrolyten schützt; eine Anode mit einer oder mehreren elektrochemisch inaktiven Oberflächen, die mit der hydrophilen Schutzschicht beschichtet ist bzw. sind, die die inaktive Oberfläche vor mindestens einem von geschmolzenem Elektrolyten und anodisch produziertem Gas schützt; oder eine Zellseitenwand umfasst, die mit der hydrophilen Schutzschicht beschichtet ist, die die Seitenwand vor mindestens einem von geschmolzenem Elektrolyten, geschmolzenem Aluminium und anodisch produziertem Gas schützt.

23. Vorrichtung nach Anspruch 22, bei der die Komponente eine Katode ist, die eine aluminiumbenetzbare Ablauf-Oberfläche hat.

24. Vorrichtung nach Anspruch 21, die ein Lichtbogenofen zum Recycling von Stahl ist, wobei die Komponente eine Lichtbogenelektrode oder ein Lichtbogenelektrodenhalter ist, die bzw. der mit der hydrophilen Schutzschicht beschichtet ist, die sie bzw. ihn vor oxidierendem Gas und/oder geschmolzenem Stahl schützt.

25. Vorrichtung nach Anspruch 21, die eine Vorrichtung zur Reinigung oder Behandlung von geschmolzenem Metall ist, insbesondere durch die Injektion von Reinigungsfluid in das geschmolzene Metall zur Entfernung von Verunreinigung in Richtung von dessen Oberfläche, wobei die Komponente ein drehbarer Rührer oder ein Gefäß zur Aufnahme des zu reinigenden oder zu behandelnden Metalls ist, wobei die Komponente vor dem zu reinigenden oder zu behandelnden Metall und gegebenenfalls dem Reinigungsfluid und Verunreinigungen des geschmolzenen Metalls durch die hydrophile Schutzschicht geschützt wird.

26. Vorrichtung nach Anspruch 25, die eine Vorrichtung zur Reinigung von geschmolzenem Aluminium, geschmolzenem Magnesium, Gusseisen oder geschmolzenem Stahl ist.

27. Verfahren zum Produzieren, Reinigen oder Recycling von Metall in einer Vorrichtung wie in einem der Ansprüche 21 bis 26 definiert, die mindestens eine Komponente umfasst, die mit der hydrophilen Schutzschicht beschichtet ist, wobei bei dem Verfahren das beschichtete Substrat einer oxidierenden und/oder korrosiven gasförmigen und/oder geschmolzenen Umgebung bei erhöhter Temperatur ausgesetzt wird.

28. Verfahren zum Binden einer wärmebeständigen Schicht, die aus einer Aufschlämmung, die hydrophile kolloidale Partikel und/oder hydrophile anorganische polymere Partikel umfasst, auf ein hydrophobes Substrat zur Verwendung bei hoher Temperatur insbesondere in einer Zelle zur elektrolytischen Gewinnung von Aluminium aus Aluminiumoxid aufgebracht wird, wobei das Verfahren umfasst:
- Zugabe von mindestens einer Kohlenstoffverbindung ausgewählt aus hydrophoben Kohlenstoffmonomeren und hydrophoben Kohlenstoffpolymeren zu der Aufschlämmung, die zudem hydrophile Substituenten in einer ausreichenden Menge umfasst, um die hydrophilen kolloidalen und/oder anorganischen polymeren Partikel an die Kohlenstoffverbindung(en) zu binden; und anschließend
- Auftragen von einer oder mehreren Schichten der Aufschlämmung auf das hydrophobe Substrat und anschließendes Trocknen und/oder Wärmebehandeln;
wobei die mindestens eine Kohlenstoffverbindung als Mittel zum Binden hydrophiler kolloidaler und/oder anorganischer polymerer Partikel an das hydrophobe Substrat durch Kohlenstoff aus der Kohlenstoffverbindung/den Kohlenstoffverbindungen verwendet wird und **dadurch** die wärmebeständige Schicht an das hydrophobe Substrat gebunden wird.

29. Verwendung von mindestens einer Kohlenstoffverbindung ausgewählt aus hydrophoben Kohlenstoffmonomeren und hydrophoben Kohlenstoffpolymeren und die hydrophile Substituenten umfassen, als Mittel zum Binden von hydrophilen kolloidalen und/oder anorganischen polymeren Partikeln an das hydrophobe Substrat durch Kohlenstoff aus der Kohlenstoffverbindung/den Kohlenstoffverbindungen und **dadurch** Binden der wärmebeständigen Schicht an das hydrophobe Substrat, in einer Aufschlämmung, die hydrophile kolloidale Partikel und/oder hydrophile anorganische polymere Partikel umfasst, um nach Trocknen und/oder Wärmebehandlung eine wärmebeständige Schicht auf einem hydrophoben Substrat zur Verwendung bei hoher Temperatur insbesondere in einer Zelle zur elektrolytischen Gewinnung von Aluminium aus Aluminiumoxid zu produzieren.

## Revendications

1. Procédé pour revêtir un substrat hydrophobe avec une couche protectrice hydrophile exempte de carbone organique pour protéger le substrat quand il est utilisé à température élevée en particulier dans une cuve pour l'électro-obtention d'aluminium à partir d'alumine dissoute dans un électrolyte contenant du fluorure, ledit procédé consistant à :
- appliquer une ou plusieurs couches d'un coulis comprenant des particules colloïdales hydrophiles et/ou des particules polymères inorganiques hydrophiles sur le substrat hydrophobe, suivi par un séchage pour former une couche de liaison intermédiaire stable à la chaleur sur le substrat hydrophobe ; et
- appliquer une ou plusieurs couches d'un coulis formant la couche protectrice hydrophile sur la couche de liaison intermédiaire, suivi par un séchage et/ou un traitement thermique pour former la couche protectrice hydrophile sur la couche de liaison intermédiaire,
**caractérisé en ce que** le coulis formant la couche de liaison intermédiaire contient au moins un composé de carbone choisi à partir de monomères de carbone hydrophobes et de polymères de carbone hydrophobes et comprenant des substituants hydrophiles dans une quantité suffisante pour lier lesdites particules colloïdales et/ou polymères inorganiques hydrophiles au(x) composé(s) en carbone.

2. Procédé selon la revendication 1, dans lequel lesdits substituants hydrophiles sont choisis à partir de -OH, -SO₃Na et -COOH, et des combinaisons de ceux-ci.

3. Procédé selon la revendication 1 ou 2, dans lequel ledit composé ou lesdits composés en carbone a/ont un rapport carbone / substituants hydrophiles dans la plage de 2 à 4.

4. Procédé selon une quelconque revendication précédente, dans lequel ledit composé ou lesdits composés en carbone est/sont choisis à partir d'éthylèneglycol, d'hexanol, d'alcool de polyvinyle, d'acétate de polyvinyle, d'acide polyacrylique, d'hydroxypropylméthylcellulose et de polyméthacrylate d'ammonium, et de mélanges de ceux-ci.

5. Procédé selon une quelconque revendication précédente, dans lequel ladite couche protectrice hydrophile est appliquée à partir d'un coulis comprenant des particules colloïdales et/ou polymères inorganiques et une matière réfractaire particulaire non dispersée.

6. Procédé selon une quelconque revendication précédente, dans lequel au moins l'un du coulis formant la couche de liaison intermédiaire et du coulis formant la couche protectrice hydrophile comprend des particules colloïdales hydrophiles choisies à partir de lithine, oxyde de béryllium, magnésie, alumine, silice, oxyde de titane, oxyde de vanadium, oxyde de chrome, oxyde de manganèse, oxyde de fer, oxyde de gallium, yttria, zircone, oxyde de niobium, oxyde de molybdène, oxyde de ruthénium, oxyde d'indium, oxyde d'étain, oxyde de tantale, oxyde de tungstène, oxyde de thallium, oxyde de cérium, oxyde d'hafnium et thorine, et des précurseurs de ceux-ci, tous sous la forme de colloïdes ; et/ou des particules polymères inorganiques hydrophiles choisies à partir de lithine, oxyde de béryllium, alumine, silice, oxyde de titane, oxyde de chrome, oxyde de fer, oxyde de nickel, oxyde de gallium, zircone, oxyde de niobium, oxyde de ruthénium, oxyde d'indium, oxyde d'étain, oxyde d'hafnium, oxyde de tantale, oxyde de cérium et thorine, et des précurseurs de ceux-ci, tous sous la forme de polymères inorganiques.

7. Procédé selon une quelconque revendication précédente, dans lequel le coulis formant la couche de liaison intermédiaire comprend de plus une matière réfractaire particulaire non dispersée ou un précurseur particulaire de celle-ci.

8. Procédé selon la revendication 7, dans lequel le coulis formant la couche de liaison intermédiaire comprend de plus du carbone particulaire.

9. Procédé selon une quelconque revendication précédente, dans lequel au moins l'un du coulis formant la couche de liaison intermédiaire et du coulis formant la couche protectrice hydrophile comprend une matière réfractaire particulaire non-dispersée choisie à partir de borures, siliciures, nitrures, oxynitrures, carbures, oxycarbures, phosphures, oxydes, aluminures, de titane, zirconium, hafnium, vanadium, silicium, niobium, tantale, nickel, molybdène et fer, et/ou un précurseur de ceux-ci.

10. Procédé selon une quelconque revendication précédente, dans lequel le substrat hydrophobe est réalisé en carbone.

11. Substrat hydrophobe revêtu d'une couche protectrice hydrophile exempte de carbone organique protégeant le substrat quand il est utilisé à haute température, en particulier dans une cuve pour l'électro-obtention d'aluminium à partir d'alumine dissoute dans un électrolyte contenant du fluorure, dans lequel la couche protectrice est liée au substrat via une couche de liaison intermédiaire qui comprend des particules colloïdales hydrophiles séchées et/ou des particules polymères inorganiques hydrophiles séchées,
**caractérisé en ce que** des particules colloïdales et/ou polymères inorganiques hydrophiles séchées de la couche de liaison intermédiaire sont intimement liées au carbone sur le substrat hydrophobe, la liaison intime entre les particules colloïdales et/ou polymères inorganiques hydrophiles et le carbone sur le substrat hydrophobe pouvant être obtenue en appliquant sur le substrat hydrophobe un coulis comprenant les particules colloïdales et/ou polymères inorganiques hydrophiles et au moins un composé de carbone choisi à partir de monomères de carbone hydrophobes et de polymères de carbone hydrophobes et comprenant des substituants hydrophiles dans une quantité suffisante pour lier les particules colloïdales et/ou polymères inorganiques hydrophiles au(x) composé(s) de carbone.

12. Substrat revêtu selon la revendication 11, dans lequel au moins l'une de la couche de liaison intermédiaire et de la couche protectrice hydrophile comprend de la lithine, de l'oxyde de béryllium, de la magnésie, de l'alumine, de la silice, de l'oxyde de titane, de l'oxyde de vanadium, de l'oxyde de chrome, de l'oxyde de manganèse, de l'oxyde de fer, de l'oxyde de gallium, de l'yttria, de la zircone, de l'oxyde de niobium, de l'oxyde de molybdène, de l'oxyde de ruthénium, de l'oxyde d'indium, de l'oxyde d'étain, de l'oxyde de tantale, de l'oxyde de tungstène, de l'oxyde de thallium, de l'oxyde de cérium, de l'oxyde d'hafnium et de la thorine hydrophiles séchés, et des précurseurs de ceux-ci, tous sous la forme de colloïdes ; et/ou des particules polymères inorganiques hydrophiles choisies à partir de lithine, d'oxyde de béryllium, d'alumine, de silice, d'oxyde de titane, d'oxyde de chrome, d'oxyde de fer, d'oxyde de nickel, d'oxyde de gallium, de zircone, d'oxyde de niobium, d'oxyde de ruthénium, d'oxyde d'indium, d'oxyde d'étain, d'oxyde d'hafnium, d'oxyde de tantale, d'oxyde de cérium et de thorine, et des précurseurs de ceux-ci, tous sous la forme de polymères inorganiques.

13. Substrat revêtu selon la revendication 11 ou 12, dans lequel au moins l'une de la couche de liaison intermédiaire et de la couche protectrice hydrophile comprend une matière réfractaire particulaire choisie à partir de borures, siliciures, nitrures, oxynitrures, carbures, oxycarbures, phosphures, oxydes, aluminures, de titane, zirconium, hafnium, vanadium, silicium, niobium, tantale, nickel, molybdène et fer, et/ou un précurseur de ceux-ci.

14. Substrat revêtu selon la revendication 13, dans lequel au moins une de la couche de liaison intermédiaire et de la couche protectrice hydrophile comprend du diborure de titane particulaire.

15. Substrat revêtu selon une quelconque revendication précédente, dans lequel au moins l'une de la couche de liaison intermédiaire et de la couche protectrice hydrophile comprend un composé métallique réfractaire particulaire, un métal colloïdal et/ou oxyde polymère inorganique séché et un autre oxyde métallique pour renforcer ladite couche (lesdites couches), l'oxyde métallique polymère inorganique séché et/ou colloïdal séché et l'oxyde du métal du composé métallique réfractaire particulaire formant des oxydes mélangés miscibles avec l'oxyde métallique de renfort.

16. Substrat revêtu selon une quelconque des revendications 11 à 15, dans lequel la couche protectrice hydrophile comprend un oxyde métallique mouillable par l'aluminium qui, quand il est exposé à l'aluminium fondu, réagit avec celui-ci pour produire de l'oxyde métallique et le métal de l'oxyde métallique mouillable par l'aluminium.

17. Substrat revêtu selon la revendication 16, dans lequel l'oxyde métallique mouillable par l'aluminium est choisi à partir d'oxydes de manganèse, fer, cobalt, nickel, cuivre, zinc, molybdène, lanthane et des combinaisons de ceux-ci.

18. Substrat revêtu selon une quelconque des revendications 11 à 17, dans lequel le substrat hydrophobe est réalisé en carbone.

19. Composant d'une cuve pour l'électro-obtention d'aluminium à partir d'alumine dissoute dans un électrolyte contenant du fluorure, comprenant une surface revêtue telle que définie selon une quelconque des revendications 11 à 18.

20. Composant d'un appareil pour traiter un métal fondu, lequel composant, pendant l'utilisation, est exposé au métal fondu, comprenant un substrat enrobé tel que défini selon une quelconque des revendications 11 à 18.

21. Appareil pour la production, la purification ou le recyclage d'un métal dans un état fondu comprenant au moins un composant qui comprend un substrat revêtu tel que défini selon une quelconque des revendications 11 à 18, et qui, pendant l'utilisation, est exposé à un environnement oxydant et/ou gazeux corrosif et/ou fondu à température élevée.

22. Appareil selon la revendication 21, qui est une cuve d'électro-obtention d'aluminium, comprenant au moins un composant qui fait partie d'un fond de cuve revêtu de ladite couche protectrice hydrophile protégeant le composant de fond de cuve de l'aluminium fondu et/ou de l'électrolyte fondu ; une cathode ayant une surface mouillable par l'aluminium formée par la couche protectrice hydrophile qui protège la cathode de l'aluminium fondu et/ou de l'électrolyte fondu ; une anode ayant une ou plusieurs surfaces électrochimiquement inactives revêtues de ladite couche protectrice hydrophile qui protège la surface inactive d'au moins l'un de l'électrolyte fondu et de gaz produit de façon anodique ; ou une paroi latérale de cuve revêtue de ladite couche protectrice hydrophile qui protège la paroi latérale d'au moins l'un de l'électrolyte fondu, de l'aluminium fondu et du gaz produit de façon anodique.

23. Appareil selon la revendication 22, dans lequel ledit composant est une cathode qui présente une surface de drainage mouillable par l'aluminium.

24. Appareil selon la revendication 21, qui est un four à arc pour le recyclage d'acier, ledit composant étant une électrode à arc ou un porte-électrode à arc revêtu de la couche protectrice hydrophile qui le protège de gaz oxydant et/ou d'acier fondu.

25. Appareil selon la revendication 21, qui est un appareil pour la purification ou le traitement d'un métal fondu, en particulier par l'injection d'un fluide d'affinage dans le métal fondu pour retirer les impuretés vers sa surface, ledit composant pouvant être un agitateur rotatif ou un récipient pour contenir le métal fondu à purifier ou à traiter, lequel composant est protégé du métal fondu à purifier ou à traiter et éventuellement du fluide d'affinage et des impuretés du métal fondu par la couche protectrice hydrophile.

26. Appareil selon la revendication 25, qui est un appareil pour la purification d'aluminium fondu, de magnésium fondu, de fonte ou d'acier fondu.

27. Procédé pour produire, purifier ou recycler un métal dans un appareil tel que défini selon une quelconque des revendications 21 à 26, lequel appareil comprend au moins un composant revêtu de ladite couche protectrice hydrophile, le procédé consistant à exposer ledit substrat revêtu à un environnement oxydant et/ou gazeux corrosif et/ou en fusion à température élevée.

28. Procédé pour lier une couche thermiquement stable appliquée à partir d'un coulis comprenant des particules colloïdales hydrophiles et/ou des particules polymères inorganiques hydrophiles sur un substrat hydrophobe pour une utilisation à haute température en particulier dans une cuve pour l'électro-obtention d'aluminium à partir d'alumine, ledit procédé consistant à :
- ajouter au coulis au moins un composé en carbone choisi à partir de monomères de carbone hydrophobes et de polymères de carbone hydrophobes et qui comprend des substituants hydrophiles dans une quantité suffisante pour lier les particules colloïdales et/ou polymères inorganiques hydrophiles au(x) composé(s) en carbone ; et par la suite
- appliquer une ou plusieurs couches du coulis sur le substrat hydrophobe, suivi par un séchage et/ou un traitement thermique pour lier les particules colloïdales et/ou polymères inorganiques hydrophiles au substrat hydrophobe par le carbone à partir du(des) composé(s) en carbone et ainsi lier ladite couche thermiquement stable sur le substrat hydrophobe.

29. Utilisation, dans un coulis comprenant des particules colloïdales hydrophiles et/ou des particules polymères inorganiques hydrophiles pour produire lors du séchage et/ou du traitement thermique une couche thermiquement stable sur un substrat hydrophobe pour une utilisation à haute température en particulier dans une cuve pour l'électro-obtention d'aluminium à partir d'alumine, d'au moins un composé en carbone choisi à partir de monomères de carbone hydrophobes et de polymères de carbone hydrophobes et qui comprend des substituants hydrophiles, comme agent pour améliorer la liaison de la couche thermiquement stable sur le substrat hydrophobe.
